# EUROPEAN PATENT APPLICATION

(11) **EP 2 698 951 A1**
(43) Date of publication of application: **19.02.2014**
(21) Application number: 13193117.2
(22) Date of filing: 30.12.2008
(51) Int. Cl.: H04L 12/46, H04L 12/28, H04L 12/701, H04L 12/50

(54) **MPL P node replacement using a link state protocol controlled ethernet network**

(30) Priority: 31.12.2007 US 124806; 08.05.2008 US 151682
(62) Divisional of application: 08870124.8
(71) Applicant: Nortel Networks Limited, St. Laurent, QC H4S 2A9 (CA)
(72) Inventor: Unbehagen, Paul, Apex, NC North Carolina 27523 (US); Bragg, Nigel, Colville, Cambridgeshire CB1 5NX (GB); Allan, David, Ontario, CA California K2B 5P9 (US)
(74) Representative: Tuckett, William John

(57) **Abstract**

When a MPLS Virtual Forwarding Entity (VFE) on a Link State Protocol Controlled Ethernet Network learns a forwarding equivalency class (FEC) to label binding from an attached MPLS-LER, it will determine an associated MAC address for the FEC, and advertise the FEC/label binding along with the MAC address. Nodes in the Ethernet network will install shortest path forwarding state for the MAC to the MPLS-VFE advertising the FEC/label binding. Each MPLS-VFEs on the Ethernet network that receive the advertisement will update its database and generate a label that is distributed to attached MPLS LERs using LDP. When the MPLS-LER needs to transmit traffic to the FEC, it will use the label provided by the MPLS-VFE. The MPLS-VFE maintains a mapping between the label and the MAC address so that it may use the MAC address to forward the packet across the Ethernet network.

## Description

### CROSS-REFERENCE TO RELATED APPLICATIONS

This application claims priority to U.S. Provisional Patent Application No. 61/124,806, filed December 31, 2007, entitled MPLS P NODE REPLACEMENT USING A LINK STATE PROTOCOL CONTROLLED ETHERNET NETWORK, the content of which is hereby incorporated herein by reference.

### TECHNICAL FIELD

The present invention relates to communication networks and, more particularly, to MPLS P-node replacement using a link state protocol controlled Ethernet network.

### BACKGROUND

Data communication networks may include various computers, servers, nodes, routers, switches, bridges, hubs, proxies, and other network devices coupled to and configured to pass data to one another. These devices will be referred to herein as "network elements." Data is communicated through the data communication network by passing protocol data units, such as Internet Protocol packets, Ethernet frames, data cells, segments, or other logical associations of bits/bytes of data, between the network elements by utilizing one or more communication links between the network elements. A particular protocol data unit may be handled by multiple network elements and cross multiple communication links as it travels between its source and its destination over the network.

The various network elements on the communication network communicate with each other using predefined sets of rules, referred to herein as protocols. Different protocols are used to govern different aspects of the communication, such as how signals should be formed for transmission between network elements, various aspects of what the protocol data units should look like, how protocol data units should be handled or routed through the network by the network elements, and how information such as routing information should be exchanged between the network elements.

Ethernet is a well known networking protocol that has been defined by the Institute of Electrical and Electronics Engineers (IEEE) as standard 802.1 In Ethernet network architectures, devices connected to the network compete for the ability to use shared telecommunications paths at any given time. Where multiple bridges or nodes are used to interconnect network segments, multiple potential paths to the same destination often exist. The benefit of this architecture is that it provides path redundancy between bridges and permits capacity to be added to the network in the form of additional links. However to prevent loops from being formed, a spanning tree was generally used to restrict the manner in which traffic was broadcast or flooded on the network. A characteristic of spanning tree is that there is only one path between any pair of destinations in the network, and therefore it was possible to "learn" the connectivity associated with a given spanning tree by watching where packets came from. However the spanning tree itself was restrictive and often led to over-utilization of the links that were on the spanning tree and non-utilization of the links that weren't part of the spanning tree.

To overcome some of the limitations inherent in Ethernet networks implementing a spanning tree, a link state protocol controlled Ethernet network was disclosed in application No. 11/537,775, filed October 2, 2006, entitled "Provider Link State Bridging," the content of which is hereby incorporated herein by reference. Two examples of link state routing protocols include Open Shortest Path First (OSPF) and Intermediate System to Intermediate System (IS-IS), although other link state routing protocols may be used as well. IS-IS is described, for example, in ISO 10589, and IETF RFC 1195, the content of each of which is hereby incorporated herein by reference.

As described in greater detail in that application, rather than utilizing a learned network view at each node by using the Spanning Tree Protocol (STP) algorithm combined with transparent bridging, in a link state protocol controlled Ethernet network the bridges forming the mesh network exchange link state advertisements to enable each node to have a synchronized view of the network topology. This is achieved via the well understood mechanism of a link state routing system. The bridges in the network have a synchronized view of the network topology, have knowledge of the requisite unicast and multicast connectivity, can compute a shortest path connectivity between any pair of bridges in the network, and individually can populate their forwarding information bases (FIBs) according to the computed view of the network.

When all nodes have computed their role in the synchronized view and populated their FIBs, the network will have a loop-free unicast tree to any given bridge from the set of peer bridges (those that require communication to that bridge for whatever reason); and a both congruent and loop-free point-to-multipoint (p2mp) multicast tree from any given bridge to the same set or subset of peer bridges per service instance hosted at the bridge. The result is the path between a given bridge pair is not constrained to using the links on the spanning tree and the overall result can better utilize the breadth of connectivity of a mesh. In essence every bridge roots one or more trees which define unicast connectivity to that bridge, and multicast connectivity from that bridge.

When customer traffic enters a provider network, the customer MAC address (C-MAC DA) is resolved to a provider MAC address (B-MAC DA), so that the provider may forward traffic on the provider network using the provider MAC address space. Additionally, the network elements on the provider network are configured to forward traffic based on Virtual LAN ID (VID) so that different frames addressed to the same destination address but having different VIDs may be forwarded over different paths through the network. In operation, a link state protocol controlled Ethernet network may associate one VID range with shortest path forwarding, such that unicast and multicast traffic may be forwarded using a VID from that range, and traffic engineering paths may be created across the network on paths other than the shortest path, and forwarded using a second VID range.

In addition to installing shortest path unicast forwarding state, the nodes may also install forwarding state for multicast trees on the network. An example of a way to implement multicast in a link state protocol controlled Ethernet network is described in greater detail in U.S. Patent Application No. 11/702,263, filed February 5, 2007, entitled "*Multicast Implementation in a Link State Protocol Controlled Ethernet Network*" the content of which is hereby incorporated herein by reference. As described in that application, link state advertisements may be used to advertise multicast group membership to cause forwarding state for a multicast group to be installed on the network. In particular, each source for a given multicast group may be assigned a destination MAC Address (DA) that is used to forward the frames on the network. The nodes on the network install forwarding state for the source/group tree if they determine that they are on a shortest path from the multicast source to one of the destination nodes advertising via the link state protocol an "interest" in the multicast group.

Interest in a multicast may be based on the community of interest identifier such as the I-SID, such that a node on the network will install forwarding state for a multicast group when it is on a shortest path between a source and destination that have both advertised interest in the community of interest identifier associated with the multicast group. An I-SID normally is associated with 802.1ah and implies an additional MAC header (customer source & destination MAC addresses). However, the I-SID has utility even if a C-MAC header is not used, because an I-SID value can identify the participants in a specific instance of mutual but otherwise closed connectivity. The forwarding state, however, is based on the multicast DA and VID associated with the multicast. In operation, multiple nodes on the network may advertise interest in a particular I-SID. The nodes on the network keep track of which nodes have advertised interest in which I-SID and will install forwarding state for a DA/VID pair associated with the I-SID if they are on the shortest path between two nodes that have advertised interest in the particular I-SID. This allows forwarding state to be installed for communities of interest so that frames can be multicast to those nodes interested in the multicast rather than requiring multicast frames to be flooded on the network.

Link state protocol controlled Ethernet networks operate at the link layer (Layer 2). That is, the ingress node creates a MAC header that may be used to switch the frame across the Ethernet network, e.g. from Node A to Node E. Other networks, such as Internet Protocol (IP) networks, operate at a higher layer such as Layer 3 (network layer). IP networks forward packets based on an IP address of an IP header associated with an IP packet.

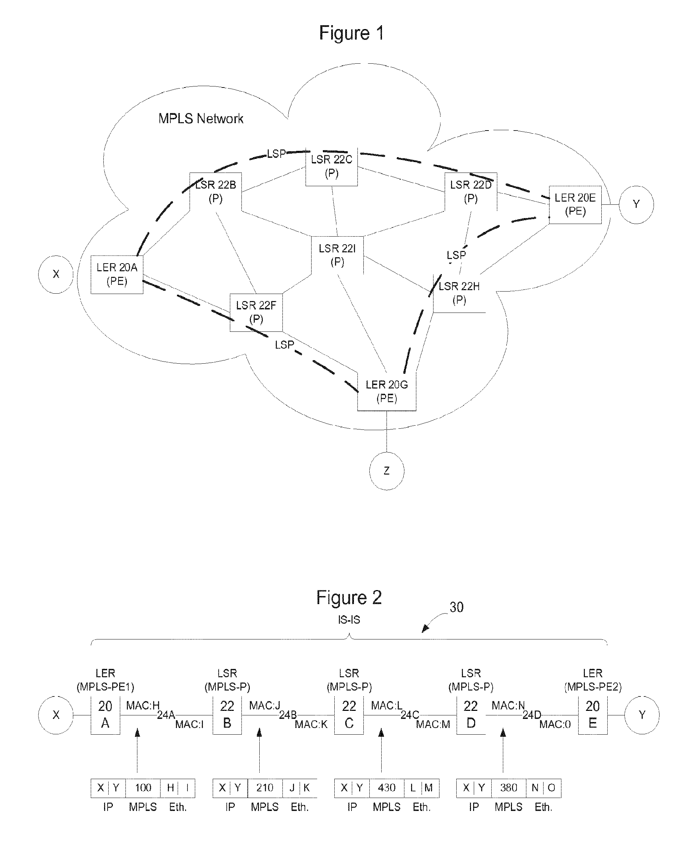

One example of an IP network is shown in Fig. 1. Specifically, Fig. 1 shows a network which is configured to use MultiProtocol Label Switching (MPLS) to forward traffic between end systems (X and Y). In the example network shown in Fig. 1, the MPLS network includes Label Edge Routers (LERs) 20A, 20E, and 20G. Label Edge Routers are also commonly called Provider Edge (PE) nodes. Within the MPLS networks, Label Switch Routers (LSRs) 22B, 22C, 22D, 22F, 22I, and 22H forward traffic along Label Switched Paths (LSPs) between the LERs. LSRs are also referred to as Provider (P) nodes.

Fig. 2 shows an example of how the network elements on an MPLS network handle an IP packet as it is forwarded across the MPLS network. As shown in Fig. 2, MPLS is used to reduce the number of IP lookups performed at the various routers in the network. In an MPLS network, a plurality of Label Switched Paths (LSPs) will be established through the MPLS network. The particular manner in which LSPs are determined and created through the network is well known. In the example shown in Fig. 2 it will be assumed that an example label switched path includes nodes A, B, C, D, E.

In MPLS, an edge node that receives packets from outside the network and chooses a path for the packet is commonly referred to as a Label Edge Router (LER). This type of network element is also commonly known as an MPLS Provider Edge (PE) node. When a packet arrives at the PE node 20A, the PE node 20A will perform an IP lookup to determine which label should be used to switch the IP packet onto the LSP through the MPLS network to reach Y. The PE 20A will also determine a next hop for the packet on the path and apply a MAC header to the packet to cause the packet to be forwarded to the next hop on the path to Label Switch Router (P-node) 22B.

Routers within the MPLS network that perform label switching to forward the packet along the path are commonly referred to as Label Switch Routers (LSR)s. This type of network element is also commonly known as an MPLS Provider (P) node. When a packet arrives at a P node, such as node 22B, the P node will strip the outer MAC header and read the MPLS label. When the LSP was established through the network the label distribution protocol will have established an association between label 100 and label 210 such that when the router 22B receives a packet with MPLS label 100 it will replace the label with a new MPLS label 210 before adding a new MAC header and forwarding to the outbound interface. Before forwarding the packet, router 22B will add a new MAC header to the packet which, in this instance, has SA=J, DA=K to identify the source MAC address as MAC J on router 22B and the destination MAC address as MAC K on router 22C.

MPLS thus allows a single IP route lookup to be performed at the edge of the MPLS network, and allows label switching to be used instead of IP lookups to forward the packet across the MPLS network. Edge routers that perform the initial IP lookup and assign the label to the packet to place the packet on the LSP are referred to as Label Edge Routers. Intermediate routers on the MPLS network that perform label switching are commonly referred to as Label Switch Routers (LSRs). Forwarding in an MPLS network is performed by swapping a label after stripping the MAC header at each hop. MPLS forwarding still requires MAC header stripping to occur at every hop across the network (when Ethernet links are employed), requires each LSR to perform a label lookup and label swap, and requires each LSR to then add another MAC header to deliver the packet to the next LSR along the LSP. This process requires more processing and intelligence on each of the nodes which thus results in an expensive solution. Additionally, for this to work the path (LSP) must be initially set up which in and of itself is a computationally expensive process.

Since link state protocol controlled Ethernet networks have the capacity to operate more efficiently than MPLS networks, and may be less expensive to implement and operate, it would be desirable to be able to replace the MPLS networks or portions of MPLS networks with link state protocol controlled Ethernet networks. However, customers with deployed MPLS networking gear may be resistant to changing or hesitant to spend additional money on new gear. Accordingly, it would be desirable to provide a way to replace at least a portion of an MPLS network with a link state protocol controlled Ethernet network, while allowing such networks to interface with existing MPLS networking gear.

### SUMMARY OF THE INVENTION

A link state protocol controlled Ethernet network is used to replace some portion of the MPLS P-nodes in an MPLS network, while retaining MPLS PE nodes to interface with customer equipment.

Incorporated in the Ethernet switched network are MPLS specific Virtual Forwarding Engines, known as MPLS-VFEs. MPLS-VFEs peer with MPLS Label Switch Routers (LSRs) at the control plane level to facilitate interworking of MPLS peers with the Ethernet switched network.

The generalized mode of operation is that an ingress MPLS-VFE will perform the necessary operations on frames received from MPLS-LSRs such that the received frames can transit the switched domain and reach the egress MPLS-LSR without requiring further inspection of the Ethernet frame payload by the nodes on the Ethernet network. Additionally, the frames, in one embodiment, contain the requisite header information for correct handling of the received frame by the egress MPLS LER such that the switched domain appears to the egress MPLS LER as a single MPLS LSR.

When an MPLS-VFE in the switched domain learns a Forward Equivalency Class (FEC) to label binding from an adjacent MPLS node, it will determine the MAC address of the interface on the MPLS node the binding was offered upon. The MPLS-VFE will generate an advertisement to advertise the FEC to label binding and the MAC address to peer MPLS-VFEs via the link state protocol. Alternatively, other methods of sharing the information can be used as a overlay to the existing link state protocol, for example a protocol such as Border Gateway Protocol (BGP) or Label Distribution Protocol (LDP) may be used to exchange the FEC/ label binding information. Nodes in the link state protocol controlled Ethernet network can then choose to add the MAC address and FEC/label binding to their link state database and will install forwarding state for the MAC address.

When an MPLS-VFE on the link state protocol controlled Ethernet network receives the link state advertisement, if the FEC is not previously known to the it will assign a label for the FEC for use by MPLS nodes connected to it, and will offer the label binding to the adjacent MPLS LSRs. The label will typically be from the MPLS-VFE "per-platform" pool of labels.

At the same time the MPLS-VFE will determine which FEC-label-MAC tuple received from peer MPLS-VFEs is actually the shortest path for the FEC and will cross connect any offered labels for the FEC to that forwarding entry. When topology changes occur, the MPLS-VFE will re-evaluate the shortest path for the FEC and update the cross connect bindings accordingly.

When a packet arrives at the MPLS PE node, it will perform any necessary processing and search for the remote MPLS PE node for which the packet is destined. The lookup will result in the remote IP for the packet as well as the labels to be used to forward the packet. The MPLS PE node thus operates in a normal manner, and will apply the label assigned by the MPLS-VFE to the packet and forward the packet to the adjacent MPLS VFE on the link state protocol controlled Ethernet network.

The MPLS-VFE will then forward the packet across the switched domain. It will strip off the outer MAC header and read the MPLS label. The edge node will use the MPLS label to determine the MAC address and any additional labels required to forward the packet across the switched domain and be correctly handled by the egress MPLS LSR. In this instance, the MAC address selected will be the MAC address supplied by the egress MPLS node associated with the interface lying on the shortest path route to that node. The ingress node on the link state protocol controlled Ethernet network will create a MAC header having a DA set to the MAC address associated with egress MPLS interface, and will forward the packet onto the link state protocol controlled Ethernet network. The nodes on the link state protocol controlled Ethernet network will forward the packet according to the installed forwarding state for the MAC address..

### BRIEF DESCRIPTION OF THE DRAWINGS

Aspects of the present invention are pointed out with particularity in the appended claims. The present invention is illustrated by way of example in the following drawings in which like references indicate similar elements. The following drawings disclose various embodiments of the present invention for purposes of illustration only and are not intended to limit the scope of the invention. For purposes of clarity, not every component may be labeled in every figure. In the figures:

Fig. 1 is a functional block diagram of an MPLS network interconnecting two network elements or networks X and Y;

Fig. 2 is a functional block diagram showing how MPLS forwarding may be performed on the network of Fig. 1;

Fig. 3 is a functional block diagram of a link state protocol controlled Ethernet network replacing P nodes of an MPLS network according to an embodiment of the invention;

Fig. 4 is a functional block diagram showing the use of a link state protocol controlled Ethernet network for MPLS-P node replacement according to an embodiment of the invention;

Fig. 5 is a functional block diagram showing the Ethernet headers applied to frames on an IP cut-through on the link state protocol controlled Ethernet network of Fig. 3;

Fig. 6 is a flow diagram of an example exchange of information to enable MPLS P-node replacement using a link state protocol controlled Ethernet network according to an embodiment of the invention; and

Fig. 7 is a schematic representation of a possible implementation of a network element configured to be used in a link state protocol controlled Ethernet network according to an embodiment of the invention

### DETAILED DESCRIPTION

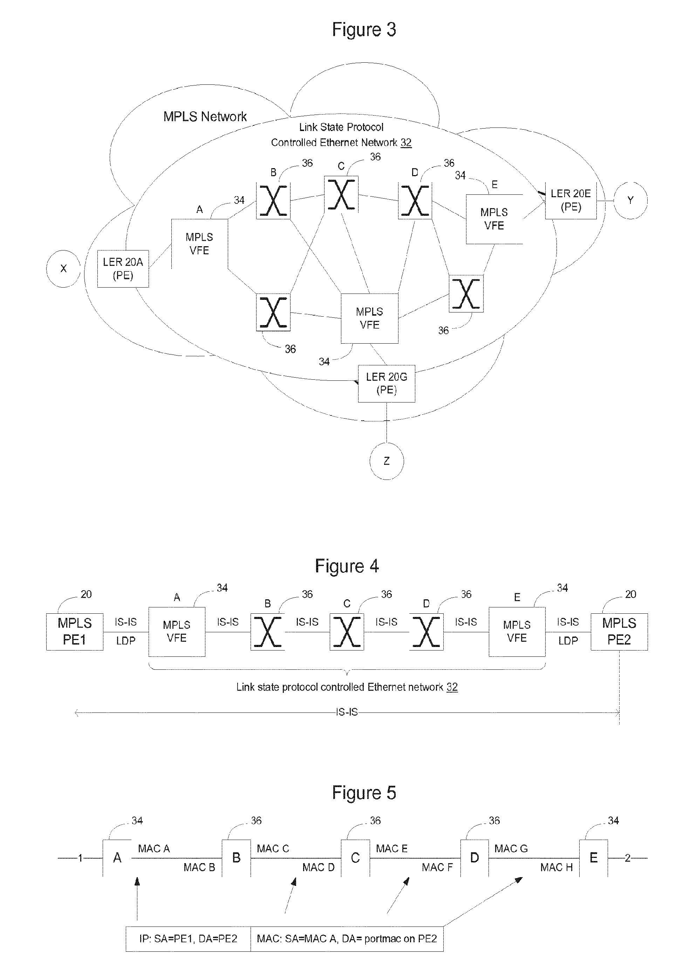

Fig. 3 shows an example network in which a link state protocol controlled Ethernet network has been interposed between the LERs 20A, 20E, and 20G. As shown in Fig. 3, the Link state protocol controlled Ethernet network 32 includes MPLS Virtual Forwarding Engines (VFEs) 34 interconnected by intermediate nodes 36. As shown in Fig. 3, the link state protocol controlled Ethernet network may replace all or a subset of the P nodes of the original MPLS network.

Fig. 4 is a functional block diagram showing the use of a link state protocol controlled Ethernet network for MPLS-P node replacement according to an embodiment of the invention. As described above in connection with Figs. 1 and 2, in a conventional MPLS network an MPLS Provider Edge (PE) node is generally implemented as a label switch router to place packets onto label switched paths through the network. Label switch routers within the network, commonly referred to as Provider (P) nodes, perform label switching to forward the packet across the network.

MPLS has a number of design attributes that facilitate interworking with other technologies. First is that MPLS forwarding is multi-point to point such that a number of senders may direct packet streams at a specific receiver. Under normal circumstances the merge function is performed at the MPLS layer, but when MPLS overlays a LAN segment or link state controlled Ethernet network (switched domain), the merge function can be performed by the Ethernet layer with an interleaved packet stream being presented to the egress from the switched domain.

MPLS has a number of concepts that are also relevant to describing the invention. A key concept in MPLS is that of the "forwarding equivalence class" or FEC, which refers to a set of packets which the network will apply common treatment to. For the interworking scenarios considered by this disclosure, the FEC will refer to the IP prefixes that the MPLS LSRs have learned from the routing system and have distributed label bindings for.

MPLS also has a concept of per-platform and per-interface label spaces, as well as label retention modes (liberal and conservative) which any interworking solution needs to handle correctly.

Finally MPLS has a concept of penultimate hop popping, in which the upstream node is expected to "pop" a label instead of swapping it when forwarding a packet to the destination MPLS node. This is signaled via the offering of a reserved label value known as the implicit NULL label. This can be considered a form of merge, in which all packets directed to a specific node have layer specific forwarding information stripped on the basis that it had not further utility, the assist to forwarding was complete at the final switching node.

An additional concept relevant to this disclosure is the notion of the use of a virtual forwarding engine described in U.S. Patent Application entitled "*IP Forwarding Across A Link State Protocol Controlled Ethernet Network,* filed on even date herewith (Attorney Docket No. 18823RNUS01U) the content of which is hereby incorporated herein by reference. As used herein, the term MPLS Virtual Forwarding Engine will be used to refer to a network element that exchanges LDP messages with MPLS peers, interworks LDP advertisements and knowledge of MAC information with the switched domain IGP, and performs MPLS label operations in addition to adaptation onto an Ethernet switched domain. The other concepts described in the related application, such as the routed domain, the switched domain, and the transit I-SID are also relevant to the possible configurations considered. The UNI I-SID may be applied, but as the MPLS-VFEs operate directly at the B-MAC layer, the imposition of a C-MAC layer to virtualize LANs appears to be an excessive complication and not a preferred embodiment.

It is also possible to imagine a generalized VFE which receives IP or MPLS packets, classifies them and adapts them onto the switched domain appropriate to the egress from the switched domain, be it another UNI, an MPLS LSR or an IP router. This would be required for correct operation if "independent" label distribution mode is employed by the surrounding MPLS nodes.

According to an embodiment of the invention, some portion of the MPLS-P nodes may be replaced with a link state protocol controlled Ethernet network. Since many providers have an installed base of MPLS networking equipment, it would be advantageous to allow providers to keep the deployed MPLS nodes so that deployed interfaces between the provider network and the customer networks/customer devices are not required to be changed. However, since the P nodes on the interior of the network are used primarily to forward traffic, a link state protocol controlled Ethernet network may be used to perform data forwarding for the MPLS network to thereby replace the cloud of P nodes forming the middle of the MPLS network. The generalized solution is not to distinguish P and PE nodes, but to support the general case of IP/MPLS interworking over a switched domain. One implication being that deployment of MPLS can be capped entirely when Ethernet edge devices replicate MPLS PE functionality as well as the ability to adapt traffic onto Ethernet switched segments.

Fig. 4 shows one example path through an Ethernet network. AS shown in Fig. 4, MPLS nodes 30 (MPLS-PE1 and MPLS-PE2) are interconnected by a link state protocol controlled Ethernet network 32 having edge nodes 34 (nodes A and E) implementing MPLS-VFEs interconnected by interior nodes 36 (nodes B, C, and D). For simplicity only a single group of nodes along a particular path through the link state protocol controlled Ethernet network 32 has been shown. In an actual network, the link state protocol controlled Ethernet network would include many nodes interconnected in a mesh or other network topography.

Nodes on the network run an interior gateway protocol such as Intermediate System to Intermediate System (IS-IS) that allows them to exchange routing information and build a synchronized view of the network topology. MPLS networks generally use the same interior gateway protocol, so requiring the MPLS nodes to run IS-IS does not require operation of the MPLS nodes to be modified. Further, the MPLS architecture embodies the concept of a hybrid network where the routing domain exceeds that of the MPLS switching domain, further facilitating interworking.

As described in greater detail below, the control plane for a link state protocol controlled Ethernet network can be used to disseminate network layer information such that shortest path forwarding of packets across the network can be performed independently of the specific switching technology used. Thus, when an edge node 34 receives an IP packet, it can forward the packet across the link state protocol controlled Ethernet network to an egress node. This can be straightforwardly extended to include MPLS forwarding, as it is simply a different set of edge classification criteria and adaptation procedures applied at a VFE to adapt packets, received in this case from MPLS LSRs, onto an Ethernet switched domain.

Currently defined MPLS over Ethernet implementations only require a classification and mapping function at the ingress to an Ethernet LAN. However the scope of an Ethernet LAN is bounded by the performance of existing spanning tree based resilience, provides sub-optimal forwarding as no metrics are considered, and increases the number of MPLS control adjacencies in proportion to the number of nodes interconnected by the LAN.

A link state protocol controlled Ethernet network is able to achieve superior performance to a LAN segment while obviating the scaling and resilience challenges outlined above. It similarly offers improved performance over replacing the LAN with an MPLS network in that only a single network layer lookup is required to forward an IP or MPLS packet across the network. However, unlike an MPLS network, the nodes on a link state protocol controlled Ethernet network are not required to strip off and replace the MAC header or swap labels at each hop as the packet progresses through the network. Additional details relating to implementation of IP forwarding on a link state protocol controlled Ethernet network are set forth in a U.S. Patent Application entitled "*IP Forwarding Across A Link State Protocol Controlled Ethernet Network,* filed on even date herewith (Attorney Docket No. 18823RNUS01U) the content of which is hereby incorporated herein by reference.

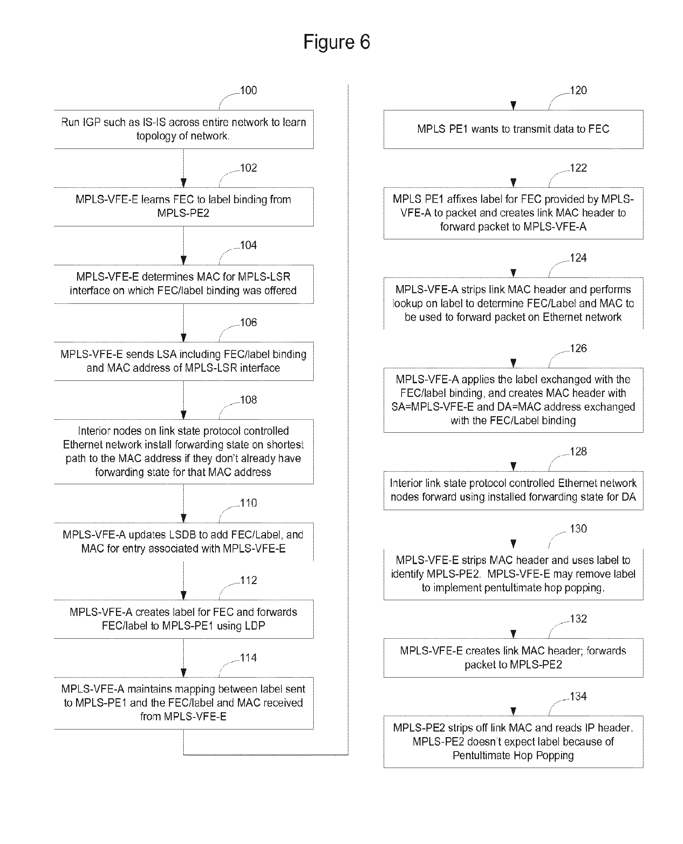

Fig. 6 shows a flow-chart of a process that may be used to obtain FEC-label-MAC tuple bindings and establish cut-through paths through the link state protocol controlled Ethernet network to enable the Link state protocol controlled Ethernet network to be used to replace the MPLS P nodes.

As shown in Fig. 6, an Interior Gateway Protocol (IGP) such as Intermediate System to Intermediate System (IS-IS) or Open Shortest Path First (OSPF) is used to exchange routing information via Link State Advertisements (LSAs) so that the nodes on the link state protocol controlled Ethernet network and the MPLS nodes may learn the network topology (100). Where IS-IS is used, the LSAs may also contain other information such as community of interest identifiers (I-SIDs), and IP addresses.

There are two key classes of information disseminated by the IGP control plane. The first is the topology of the routed domain, which includes network layer prefix information, and the second is the FEC-label-MAC binding information obtained by LDP exchange between MPLS-VFEs and MPLS LSRs for use within the switched domain.

When an MPLS VFE in the Ethernet switched domain is offered a FEC to label binding by an MPLS peer (102) it will determine the MAC for the MPLS LSR interface on which the binding was offered (104). This can be implemented using one of several available techniques, such as retaining knowledge the MAC address of the MPLS LSR interface associated with the LDP adjacency, or via initiating an Address Resolution Protocol (ARP) request for the IP address of the LDP peer from which the label binding was received.

The MPLS-VFE-A will then generate a Link State Advertisement (LSA) including the FEC and label information and the interface MAC of the MPLS node that offered the FEC/label binding (106). In the example shown in Fig. 4, the edge node 34E would generate a LSA containing the FEC reachable via MPLS-PE2 and the interface MAC it learned from MPLS-PE2 using one of the mechanisms described above.

The interior nodes A, B, C will receive the LSA and use the information in the LSA to install forwarding state on the shortest path to the MAC address if a-priori knowledge of the interface did not already exist, such as if it were associated with another FEC (108). This allows shortest path forwarding state to be installed in the forwarding information bases of the nodes on the link state protocol controlled Ethernet network so that packets addressed to the MAC address will be forwarded by the nodes on the network along shortest path routes to the edge node that advertised the IP address.

When the MPLS-VFE-A 34A receives the LSA, it will update its Link State Database to allow the FEC, label information and port MAC address to be added to the entry for node 34E (110). In addition, if the MPLS VFE has no previous knowledge of the FEC, the MPLS-VFE 34A will allocate a label or labels for the FEC from the locally administered pool (depending on the preferred label space configured to be used) and offer the label(s) to any attached MPLS-LSRs using the Label Distribution Protocol (LDP) commonly used to pre-provision label bindings in a conventional MPLS network (112). The MPLS-VFE 34A will maintain a mapping between the labels that it has offered and the corresponding shortest Ethernet switched path for the FEC through the link state protocol controlled Ethernet network (114), so that it may later map packets received from peer MPLS-LSRs onto the switched path across the switched domain. For example, as shown in Fig. 4, MPLS-VFE 34A will allocate a label and use LDP to distribute the label for the FEC address to MPLS-PE1. This will allow MPLS-PE1 to associate the label with the FEC so that it will transmit all packets destined for the FEC using the label assigned by the MPLS-VFE 34A when MPLS-PE1 has determined MPLS-VFE 34A is the next hop for the FEC.

When the MPLS LSR wants to transmit a packet to the FEC (120), it will encapsulate the packet with the label that was provided to it by the MPLS-VFE 34A for use with that FEC. The MPLS LSR will also create a link MAC header to transmit the packet to MPLS-VFE 34A in the link state protocol controlled Ethernet network (122). In the example shown in Fig. 4, the link MAC header will use the port MAC of the MPLS-LSR that is sending the packet as the Source MAC Address (SA), and may use the nodal MAC of the MPLS-VFE 34A as the Destination MAC address (DA) (depending on what MAC the MPLS VFE used in exchange with MPLS-PE1). The MPLS-LSR will then forward the packet to the MPLS-VFE 34A.

When the MPLS-VFE-A receives the packet, it will read the MAC header identifying the packet as addressed to it and, from the Ethertype, determine that the payload is a well formed IP or MPLS packet. Thus, the MPLS VFE 34A will strip off the link MAC header and read the label or packet header. The MPLS-VFE-A will perform a lookup operation on the label to determine the label and MAC information required to be applied to the packet in lieu of the received MAC and label information in order to forward the packet across the switched domain and be correctly understood by the MPLS LSR receiving the packet at the egress from the switched domain (124). This may be a label/MAC tuple or in the case where MPLS-PE2 offered an implicit NULL, may only be MAC information. (Note that if the bottom of stack bit was set by MPLS-PE1, this will also require re-writing the Ethertype field).

The MPLS-VFE will apply the label exchanged during the FEC/label binding and create a MAC header to ship the packet across the link state protocol controlled Ethernet network (126). The packet is then forwarded to MPLS-VFE-E across the switched domain (128). Since the interior nodes have forwarding state installed for the destination MAC, they simply forward the packet without performing a MAC strip operation at each hop through the network. Thus, the packet requires no further intervention by the interior nodes as it traverses the switched domain 32.

When the packet arrives at MPLS-VFE-E, the MPLS-VFE will strip the MAC header and use the label to identify the MPLS-PE node to which it should forward the packet. The MPLS-VFE may remove the label at this stage to implement pentultimate hop popping (130). The MPLS-VFE-E may also create a link MAC header and forward the packet to the destination MPLS-PE node (132).

Upon receipt, the MPLS-PE2 LSR node will strip off the link MAC header and process the packet according to the Ethertype in the MAC header which may indicate that the packet is an MPLS packet or an IP packet (134). Thus, receipt of the packet by the MPLS node will occur without requiring modification of the manner in which the MPLS LSR operates. In this example, it has been assumed that MPLS-PE2 promiscuously receives packets addressed to it independent of the SA MAC.

As MPLS in general replicates many aspects of IP and is designed to operate over Ethernet links and LAN segments. Thus, MPLS-VFEs can be attached to MPLS LSR(s) via p2p links, via physical LAN segments, via virtual LAN segments. Further MPLS VFEs may be interconnected by transit I-SIDs, with the modification that, in a preferred embodiment, MPLS label processing only occur at a single MPLS-VFE in the switched domain.

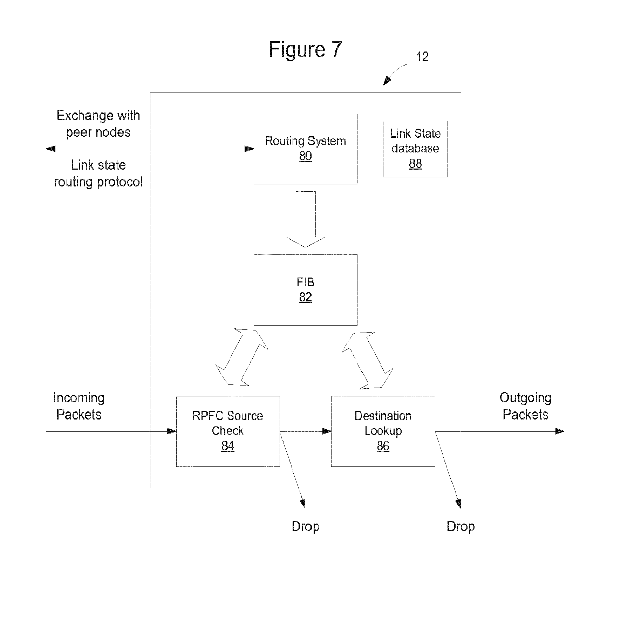

Fig. 7 is a schematic representation of a possible implementation of a network element 12 configured to be used in a link state protocol controlled Ethernet network. The network element 12 includes a routing system module 80 configured to exchange control messages containing routing and other information with peer bridges in the network regarding the network topology using a link state routing protocol. Information received by the routing system 80 may be stored in a link state data base 88 or in another manner. As discussed previously, the exchange of information allows bridges on the network to generate a synchronized view of the network topology, which then allows the routing system module 80 to calculate the shortest paths to other nodes on the network. The shortest paths calculated by the routing system 80 will be programmed into a FIB 82, which is populated with the appropriate entries for directing traffic through the network based upon the calculated shortest paths, multicast trees, traffic engineered path entries, and based on other entries.

According to an embodiment of the invention, the routing system 80 may exchange route updates containing FEC/label bindings and associated MAC addresses. The information exchanged via the link state routing system will be stored in a link state database 88 on the network element 12 to allow ingress nodes to select the correct egress node on the link state protocol controlled Ethernet network for labeled packets.

The network element 12 may also include one or more other modules such as a Reverse Path Forwarding Correction (RPFC) source check module 84 that may be used to process incoming frames / packets and perform a lookup in the FIB 82 to determine if the port over which the frame was received coincides with the port identified in the FIB 82 for the particular Source MAC. Where the input port does not coincide with the correct port identified in the FIB, the RPFC source check module may cause the frame/packet to be dropped so that loops may be avoided in the link state protocol controlled Ethernet network.

If the frame passes the RPFC source check 84 module, a destination lookup 86 module determines from the FIB 82 the port or ports over which the frame should be forwarded. If the FIB has no entry for the DA/VID, the frame is discarded.

It should also be understood that the modules described are for illustrative purposes only and may be implemented by combining or distributing functions among the modules of a bridge node as would be understood by a person of skill in the art.

The functions described above may be implemented as a set of program instructions that are stored in a computer readable memory and executed on one or more processors on the computer platform. However, it will be apparent to a skilled artisan that all logic described herein can be embodied using discrete components, integrated circuitry such as an Application Specific Integrated Circuit (ASIC), programmable logic used in conjunction with a programmable logic device such as a Field Programmable Gate Array (FPGA) or microprocessor, a state machine, or any other device including any combination thereof. Programmable logic can be fixed temporarily or permanently in a tangible medium such as a read-only memory chip, a computer memory, a disk, or other storage medium. All such embodiments are intended to fall within the scope of the present invention.

It should be understood that various changes and modifications of the embodiments shown in the drawings and described in the specification may be made within the spirit and scope of the present invention. Accordingly, it is intended that all matter contained in the above description and shown in the accompanying drawings be interpreted in an illustrative and not in a limiting sense. The invention is limited only as defined in the following claims and the equivalents thereto.
The invention may be defined by the following clauses:
1. A method of using a link state protocol controlled Ethernet network to replace P nodes in a MultiProtocol Label Switching (MPLS) network, the method comprising the steps of:
   learning a Forward Equivalence Class (FEC) to label binding by a virtual forwarder in the link state protocol controlled Ethernet network from a Label Distribution Protocol (LDP) adjacency in the MPLS network;
   learning a MAC address associated with the FEC/label binding; and
   advertising the FEC/label binding and MAC address in a link state advertisement on the link state protocol controlled Ethernet network.
2. The method of clause 1, wherein the step of learning the MAC address is performed by retaining knowledge of the MAC address of the MPLS LSR interface associated with the LDP adjacency.
3. The method of clause 1, wherein the step of learning the MAC address is performed by initiating an Address Resolution Protocol (ARP) request for the IP address of the LDP adjacency from which the FEC to label binding was received.
4. The method of clause 1, wherein the LDP adjacency is associated with a MPLS Label Switch Router (LSR).
5. The method of clause 4, wherein the MAC address is a port MAC address on the MPLS LSR.
6. The method of clause 4, further comprising receiving a packet having a MAC header including a source address identifying another node on the link state protocol controlled Ethernet network and a destination address including the discovered MAC address.
7. The method of clause 6, further comprising the step of removing the MAC header and creating link MAC header to forward the packet to the MPLS LSR.
8. A method of using a link state protocol controlled Ethernet network to replace P nodes in a MultiProtocol Label Switching (MPLS) network, the method comprising the steps of:
   receiving a link state advertisement by a node on the link state protocol controlled Ethernet network, the link state advertisement containing Forwarding Equivalence Class (FEC) to MPLS label binding and a MAC address of a MPLS PE network element that offered the FEC/label binding;
   creating, by the node, a second label to be used by other MPLS PE network elements in connection with transmitting packets to the FEC;
   distributing the second label to the other MPLS PE network elements.
9. The method of clause 8, wherein the node on the link state protocol controlled Ethernet network is a MPLS Virtual Forwarding Engine (VFE).
10. The method of clause 9, wherein the step of distributing the second label is performed using a Label Distribution Protocol (LDP) commonly used to provide labels to the other MPLS PE network elements, so that no modification of the behavior of the MPLS PE network elements is required to enable the MPLS PE network elements to interact with the MPLS-VFE.
11. The method of clause 8, wherein the MAC address is a port MAC address of the MPLS PE network element that offered the FEC/label binding.
12. The method of clause 8, further comprising the step of maintaining, by the node, a mapping between the second label and the FEC/label binding and MAC address.
13. The method of clause 12, further comprising the step of receiving, by the node, a packet containing the label; determining the MAC address from the label, creating a MAC header for the packet using the MAC address, and forwarding the packet onto the link state protocol controlled Ethernet network.
14. The method of clause 13, wherein the MAC header has a source MAC address set to a MAC address of the node, and a destination MAC address set to the MAC address.
15. A network, comprising:
   a plurality of edge nodes and interior nodes forming a link state protocol controlled Ethernet network, the plurality of edge nodes being connected to a plurality of MultiProtocol Label Switching (MPLS) Label Edge Routers (LERs) and providing interconnectivity between the MPLS LERs,
   wherein the edge nodes of the link state protocol controlled Ethernet network receive Forward Equivalence Class (FEC) to label bindings from the MPLS LERs and advertise the FEC/label bindings along with associated MAC addresses; and
   wherein the interior nodes install shortest path forwarding state for the MAC address to the edge node that advertised the FEC/label binding.

## Claims

1. A method of using a link state protocol controlled Ethernet network to replace P nodes in a Multi Protocol Label Switching (MPLS) network, the method comprising:
receiving a link state advertisement by a node on the link state protocol controlled Ethernet network, the link state advertisement containing a Forwarding Equivalence Class (FEC) to MPLS label binding and a MAC address of a MPLS provider edge (PE) network element that offered the FEC/label binding;
creating, by the node, a second label to be used by other MPLS PE network elements in connection with transmitting packets to the FEC; and
distributing the second label to the other MPLS PE network elements.

2. The method of claim 1, wherein the node on the link state protocol controlled Ethernet network is a MPLS Virtual Forwarding Engine (VFE).

3. The method of claim 2, wherein distributing the second label is performed using a Label Distribution Protocol (LDP) commonly used to provide labels to the other MPLS PE network elements, so that no modification of the behavior of the MPLS PE network elements is required to enable the MPLS PE network elements to interact with the MPLS VFE.

4. The method of claim 1, wherein the MAC address of the MPLS PE network element that offered the FEC/label binding is a port MAC address of the MPLS PE network element that offered the FEC/label binding.

5. The method of claim 1, further comprising maintaining, by the node, a mapping between the second label and the label of the FEC/label binding_and MAC address of the MPLS PE network element that offered the FEC/label binding.

6. The method of claim 5, further comprising receiving, by the node, a packet containing the second label;
determining the MAC address from the second label; creating a MAC header for the packet using the MAC address of the MPLS PE network element that offered the FEC/label binding; and
forwarding the packet onto the link state protocol controlled Ethernet network.

7. The method of claim 6, wherein the MAC header has a source MAC address set to a MAC address of the node, and a destination MAC address set to the MAC address of the MPLS PE network element that offered the FEC/label binding.

8. A network, comprising:
a plurality of nodes forming a link state protocol controlled Ethernet network;
a node of the plurality of nodes on the link state protocol controlled Ethernet network receiving a link state advertisement, the link state advertisement containing a Forwarding Equivalence Class (FEC) to MPLS label binding and a MAC address of a MPLS provider edge (PE) element of the network that offered the FEC to label binding;
the node creating a second label to be used by other MPLS PE elements in the network in connection with transmitting packets to the FEC; and
the node distributing the second label to the other MPLS PE elements of the network.

9. A method of using a link state protocol controlled Ethernet network to advertise Forwarding Equivalence Class (FEC) to label bindings in a MultiProtocol Label Switching (MPLS) network, the method comprising:
selecting, by a node in the link state protocol controlled Ethernet network, a label for a Forwarding Equivalence Class (FEC) to label binding;
selecting, by the node, a MAC address associated with the FEC/label binding; and
advertising the FEC/label binding and the associated MAC address in a link state advertisement on the link state protocol controlled Ethernet network.

10. The method of claim 9, wherein learning the MAC address is performed by retaining knowledge of the MAC address of an MPLS Label Switch Router interface associated with a Label Distribution Protocol adjacency.

11. The method of claim 9, wherein learning the MAC address is performed by initiating an Address Resolution Protocol request for the IP address of a Label Distribution Protocol adjacency from which the FEC/label binding was received.

12. The method of claim 10, wherein the Label Distribution Protocol adjacency is associated with an MPLS Label Switch Router.

13. The method of claim 12, wherein the MAC address is a port MAC address on the MPLS Label Switch Router.

14. The method of claim 12, further comprising receiving a packet having a MAC header including a source address identifying another node on the link state protocol controlled Ethernet network and a destination address including the learned MAC address.

15. The method of claim 14, further comprising removing the MAC header and creating a link MAC header to forward the packet to the MPLS Label Switch Router.
